# EUROPÄISCHE PATENTSCHRIFT

(11) **EP 1 674 738 B1**
(45) Veröffentlichungstag und Bekanntmachung des Hinweises auf die Patenterteilung: **23.07.2008**
(21) Anmeldenummer: 05027769.8
(22) Anmeldetag: 19.12.2005
(51) Int. Cl.: F16B 13/00

(54) **Universaldübel**
Allround dowel
Cheville universelle

(30) Priorität: 22.12.2004 DE 202004019778 U
(43) Veröffentlichungstag der Anmeldung: 28.06.2006
(73) Patentinhaber: Berner GmbH, 74653 Künzelsau (DE)
(72) Erfinder: Runge, Erich, 74653 Künzelsau (DE)
(74) Vertreter: Sties, Jochen

(56) Entgegenhaltungen:
- AT-B- 351 732
- DE-A1- 3 732 596
- DE-A1- 19 933 671
- DE-U1- 20 119 596
- FR-A1- 2 776 722

## Beschreibung

Die Erfindung betrifft einen Dübel.

Ein Dübel aus Kunststoff, mit einem Schaft, der aus vier langgestreckten Segmenten besteht, die am Vorderende des Dübels und am Hinterende miteinander verbunden sind, wobei am Vorderende ein Eingriffsabschnitt für eine Schraube vorgesehen ist, wobei an zwei einander gegenüberliegenden Segmenten jeweils eine Lasche angeordnet ist, die als Verdrehsicherung wirkt, ist ein Universaldübel, der sowohl in harten Materialien, beispielsweise Ziegel, als auch in weichen Materialien oder gar als Hohlraumdübel eingesetzt werden kann. Wenn der Dübel in harten Materialien verwendet wird, wird der Schaft von der in den Dübel eingeschraubten Schraube gespreizt, so daß der Dübel gegen die Wand der Bohrung, in die er eingesetzt ist, gedrückt wird und sich dort verankert. Wenn der Dübel als Hohlraumdübel verwendet wird, beispielsweise in einer Gipskartonplatte, zieht die Schraube, wenn sie in den Dübel eingeschraubt wird, über den Eingriffsabschnitt das Vorderende hin zum Hinterende, wodurch der Schaft ausbaucht oder sich aufspreizt und an der Rückseite der Gipskartonplatte anliegt.

In der AT 351 732 ist ein viersegmentiger Dübel gezeigt, der an seinem Hinterende an jedem Segment eine schräg zulaufende Rippe besitzt.

Die FR 2 776 722 A1 stellt einen zweisegmentigen Dübel vor, dessen Segmente durch gekrümmt verlaufende Stege miteinander verbunden sind. Am Hinterende ist an jedem Segment eine Hauptrippe mit einem Abschnitt konstanter Höhe und einem schräg zulaufenden Endabschnitt angeordnet: Zwischen den Hauptrippen liegt jeweils eine Nebenrippe, die von der Form her der Hauptrippe entspricht, aber deutlich kürzer gestaltet ist.

Bei dem in der DE 37 32 596 A1 gezeigten zweisegmentigen Dübel sind an den Segmente jeweils zwei abstehende Laschen vorgesehen, die als Verdrehsicherung wirken. Am Hinterende weist jedes Segment eine lange Hauptrippe auf. Zwischen den Segmenten ist jeweils eine deutlich kürzere Nebenrippe vorgesehen.

Es hat sich herausgestellt, daß die bekannten Dübel nicht immer zuverlässig arbeiten. Wenn der Dübel in harten Materialien verwendet wurde, waren die erzielten Ausreißkräfte nicht immer zufriedenstellend. Wenn der Dübel in weichen Materialien verwendet wurde, waren die an den Segmenten angeordneten Laschen nicht immer in der Lage, ein Mitdrehen des Dübels beim Einschrauben einer Schraube zu verhindern. Wenn der Dübel als Hohlraumdübel verwendet wurde, war das Anzugsdrehmoment für die Schraube, damit der Dübel sich aufspreizte, so hoch, daß die Gefahr eines Mitdrehens des Dübels bestand.

Die Aufgabe der Erfindung besteht darin, einen Dübel zu schaffen, der die oben genannten Nachteile nicht aufweist.

Zur Lösung dieser Aufgabe ist erfindungsgemäß ein Dübel mit den Merkmalen des Anspruchs 1.

Die Hauptrippe bietet eine verbesserte Verdrehsicherung, die insbesondere dann wirksam ist, wenn der Dübel in einem weichen Material wie einer Gipskartonplatte eingesetzt wird. Der Auslaufabschnitt ist dabei so ausgeführt, daß er ein Aufspreizen des Dübels, wenn dieser als Hohlraumdübel verwendet wird, nicht behindert.

Die gegenüber dem Stand der Technik deutlich vergrößerte Wandstärke der Segmente unterhalb der Laschen erhöht die Kraft, die notwendig ist, um die Laschen flach an die Segmente zu drücken. Dadurch erhöht sich der Verdrehwiderstand, den die Laschen bieten. Die Verwendung einer im wesentlichen konstanten Wandstärke bei zwei einander gegenüberliegenden Segmenten führt dazu, daß mehr Dübelmaterial vorhanden ist, welches von einer in den Dübel eingeschraubten Schraube nach außen verdrängt wird. Dies führt zu einer verbesserten Verankerung des Dübels insbesondere in harten Materialien. Die Verwendung von mehreren Zähnen an zwei einander gegenüberliegenden Segmenten führt zu einer besseren Verankerung des Dübels im Bohrloch. Die Verwendung von Nuten zwischen den Segmenten, die sich bis auf Höhe des ersten Abschnittes der Rippen erstrecken, erleichtert das Aufspreizen des Dübels, wenn dieser als Hohlraumdübel verwendet wird.

Vorteilhafte Ausgestaltungen der Erfindung ergeben sich aus den Unteransprüchen.

Die Erfindung wird nachfolgend anhand einer bevorzugten Ausführungsform beschrieben, die in den beigefügten Zeichnungen dargestellt ist. In diesen zeigen:

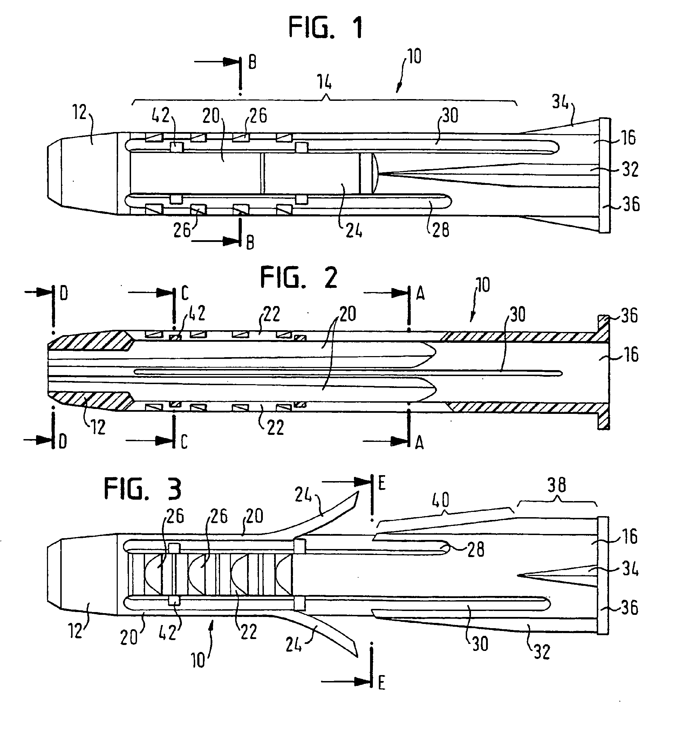

- Figur 1 eine erste Seitenansicht des erfindungsgemäßen Dübels;

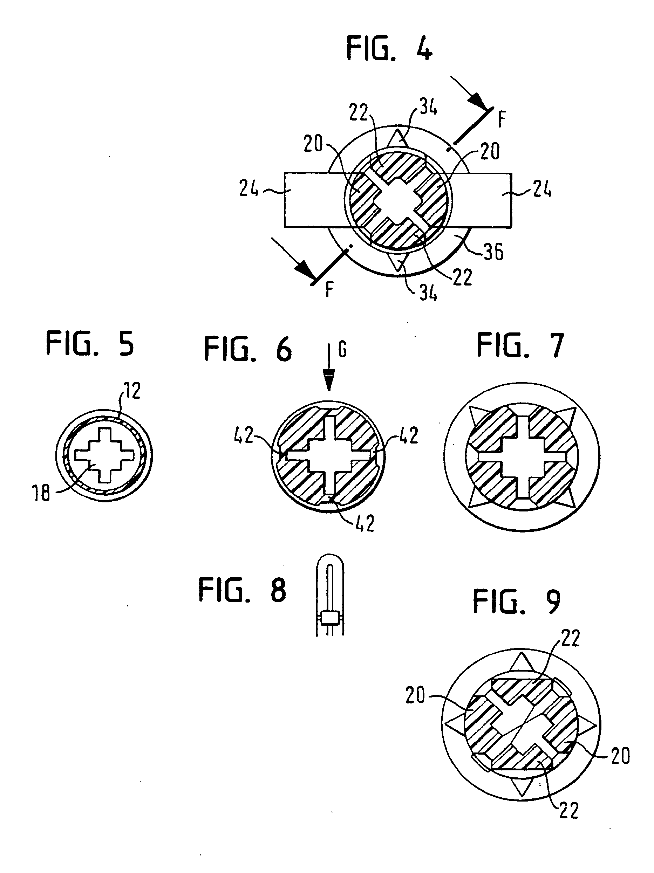

- Figur 2 einen Querschnitt entlang der Linie F-F von Figur 4;
- Figur 3 eine zweite Seitenansicht des Dübels;
- Figur 4 einen Schnitt entlang der Ebene B-B von Figur 1;
- Figur 5 einen Schnitt entlang der Ebene D-D von Figur 2;
- Figur 6 einen Schnitt entlang der Ebene C-C von Figur 2;
- Figur 7 einen Schnitt entlang der Ebene A-A von Figur 2;
- Figur 8 eine ausschnittsweise Ansicht in der Richtung des Pfeils G von Figur 6; und
- Figur 9 einen Schnitt entlang der Ebene E-E von Figur 3.

In den Figuren ist ein Dübel 10 gezeigt, der ein konisch zulaufendes Vorderende 12, einen Schaft 14 und ein Hinterende 16 aufweist.

Das Vorderende ist als in Umfangsrichtung geschlossener Eingriffsabschnitt ausgeführt, der ein Innenprofil 18 hat, in welches sich die Flanken einer in den Dübel einzuschraubenden Schraube eingraben. Das Innenprofil 18 ist kreuz/quaderförmig, also gebildet durch ein Quadrat und ein mit dem Quadrat überlagertes, größeres Kreuz. Auf diese Weise ergibt sich ein guter Kompromiß zwischen einer hohen Haltekraft und einem geringen Einschraubwiderstand.

Der Schaft 14 ist gebildet durch insgesamt vier langgestreckte Segmente 20, 22, die einander paarweise gegenüberliegen. Die Segmente 20 sind mit jeweils einer Lasche 24 versehen, die nach hinten und außen absteht. Vor der Lasche 24, also im Bereich zwischen dem Fuß der Lasche 24 und dem Vorderende des Dübels, sind die beiden Segmente mit konstanter Wandstärke und im wesentlichen glatter Außenfläche ausgeführt. Unterhalb der Laschen 24, also zwischen dem Fuß der Lasche 24 und ihrem Hinterende, ist die Wandstärke des entsprechenden Segments 20 nur geringfügig kleiner als im Bereich vor den Laschen. Dies verhindert, daß die Laschen 24 flach an die Außenseiten der Segmente 20 angedrückt werden können. Anders ausgedrückt weisen die Segmente 20, anders als im Stand der Technik, keine "Tasche" auf, in welche die Lasche hineingebogen werden kann, so daß sie nicht über den Außenumfang des Schaftes hinaussteht.

Die beiden Segmente 22, die zwischen den mit den Laschen 24 versehenen Segmenten 20 liegen, sind auf ihrer Außenfläche im Bereich zwischen dem Vorderende des Dübels und dem Fuß der Laschen 24 mit hinterschnittenen Zähnen 26 versehen.

Die Segmente 20, 22 sind jeweils durch eine Nut 28, 30 voneinander getrennt. Die beiden Nuten 28 enden dabei in Längsrichtung betrachtet in größerem Abstand vom Hinterende 16 als die beiden Nuten 30. Die Nuten 30 erstrecken sich etwa um die Länge der beiden Laschen 24 weiter nach hinten als die Nuten 28.

Am Hinterende 16 des Dübels 10 sind insgesamt vier Rippen angeordnet, nämlich zwei Hauptrippen 32 und zwei Nebenrippen 34. Die Hauptrippen und die Nebenrippen sind paarweise einander diametral gegenüberliegend angeordnet und erstrecken sich ausgehend von einem Bund 36, der das Hinterende 16 des Dübels begrenzt. Die Hauptrippen 32 erstrecken sich ausgehend vom Bund 36 zunächst mit einem ersten Abschnitt 38 konstanter Höhe, an den sich ein Auslaufabschnitt 40 anschließt, der einen kontinuierlichen Übergang in das Segment 20 darstellt. Der Auslaufabschnitt 40 endet etwa auf der Höhe der Nuten 28. Die Nebenrippen 34 verlaufen ausgehend vom Bund 36 dreiecksförmig zum entsprechenden Segment 22 hin. Sie enden etwa auf der Höhe der Nuten 30, wobei diese Höhe etwa zusammenfällt mit dem Übergang vom Abschnitt 38 der Hauptrippen zum Abschnitt 40.

Zwischen den Segmenten 20, 22 sind in jeder Nut drei dünne Stege 42 vorgesehen, die sich in Umfangsrichtung erstrecken und die Segmente miteinander verbinden.

## Patentansprüche

1. Dübel (10), insbesondere bestehend aus Kunststoff, mit einem Schaft (14), der aus vier langgestreckten Segmenten (20, 22) besteht, die am Vorderende (12) des Dübels und am Hinterende (16) miteinander verbunden sind, wobei am Vorderende (12) ein Eingriffsabschnitt für eine Schraube vorgesehen ist, wobei an zwei einander gegenüberliegenden Segmenten (20) jeweils eine Lasche (24) angeordnet ist, die als Verdrehsicherung wirkt;
wobei sich ausgehend vom Hinterende zwei einander gegenüberliegende Hauptrippen (32) in Richtung zum Vorderende erstrecken; wobei jede Hauptrippe einen ersten Abschnitt (38) konstanter Höhe aufweist und anschließend einen Auslaufabschnitt (40), zwischen den beiden Hauptrippen (32) jeweils eine Nebenrippe (34) angeordnet ist, die ausgehend vom Hinterende schräg ausläuft, und die Länge der Nebenrippen (34) etwa die Länge des ersten Abschnittes (38) der Hauptrippen (32) beträgt.

2. Dübel nach Anspruch 1, **gekennzeichnet durch** eines oder mehrere der folgenden Merkmale:
- die Wandstärke der Segmente (20) ist unterhalb der Laschen nicht oder nur unwesentlich verringert;
- zwei einander gegenüberliegende Segmente (20) sind mit einer im wesentlichen konstanten Wandstärke ausgeführt;
- zwei einander gegenüberliegende Segmente (22) sind jeweils mit mehreren Zähnen (26) versehen;
- mindestens eine der Nuten (30) zwischen benachbarten Segmenten (20, 22) erstreckt sich bis auf Höhe des ersten Abschnittes (38) der Rippe (32).

3. Dübel nach einem der vorhergehenden Ansprüche, **dadurch gekennzeichnet, daß** die Wandstärke der Segmente (20) unterhalb der Laschen (24) so groß ist, daß die Laschen (24) nicht flach an die Segmente (20) angepreßt werden können.

4. Dübel nach einem der vorhergehenden Ansprüche, **dadurch gekennzeichnet, daß** die Segmente (20) konstanter Wandstärke und die Segmente (22) mit den Zähnen (26) abwechselnd angeordnet sind.

5. Dübel nach einem der vorhergehenden Ansprüche, **dadurch gekennzeichnet, daß** sich zwei einander diametral gegenüberliegende Nuten (30) bis auf Höhe des ersten Abschnittes (38) der Hauptrippen (32) erstrecken.

6. Dübel nach einem der vorhergehenden Ansprüche, **dadurch gekennzeichnet, daß** zwischen benachbarten Segmenten (20, 22) dünne Stege (42) vorgesehen sind, die sich in Umfangsrichtung erstrecken.

7. Dübel nach einem der vorhergehenden Ansprüche, **dadurch gekennzeichnet, daß** der Eingriffsabschnitt für die Schraube ein kreuz/quaderförmiges Innenprofil (18) aufweist.

8. Dübel nach einem der vorhergehenden Ansprüche, **dadurch gekennzeichnet, daß** am Hinterende (16) ein Bund (36) vorgesehen ist, der die Einschubtiefe des Dübels (12) begrenzen soll.

## Claims

1. A plug (10), in particular made of plastics, comprising a shank (14) which consists of four elongated segments (20, 22) connected to each other on the front end (12) of the plug and on the rear end (16), an engagement section for a screw or bolt being provided on the front end (12), two opposite segments (20) each having a tongue (24) arranged thereon which acts as an anti-rotation member;
starting from the rear end, two opposite main ribs (32) extending towards the front end, each main rib having a first section (38) of constant height and an adjoining run-out section (40), the two main ribs (32) being arranged in an alternating relationship with two secondary ribs (34) which run out obliquely starting from the rear end, and the length of the secondary ribs (34) being approximately equal to the length of the first section (38) of the main ribs (32).

2. The plug according to claim 1, **characterized by** one or more of the following features:
- the wall thickness of the segments (20) is not or only insignificantly reduced below the tongues;
- two opposite segments (20) are configured to have a substantially constant wall thickness;
- two opposite segments (22) are each provided with a plurality of teeth (26);
- at least one of the grooves (30) between adjacent segments (20, 22) extends up to the level of the first section (38) of the rib (32).

3. The plug according to any of the preceding claims, **characterized in that** the wall thickness of the segments (20) below the tongues (24) is of a size such that the tongues (24) can not be pressed flatly against the segments (20).

4. The plug according to any of the preceding claims, **characterized in that** the segments (20) of constant wall thickness and the segments (22) having the teeth (26) are arranged to alternate.

5. The plug according to any of the preceding claims, **characterized in that** two diametrically opposed grooves (30) extend up to the level of the first section (38) of the main ribs (32).

6. The plug according to any of the preceding claims, **characterized in that** thin webs (42) extending in the circumferential direction are provided between adjacent segments (20, 22).

7. The plug according to any of the preceding claims, **characterized in that** the engagement section for the screw or bolt has a cruciform/parallelepipedal inner profile (18).

8. The plug according to any of the preceding claims, **characterized in that** a collar (36) which is intended to limit the insertion depth of the plug (12) is provided on the rear end (16).

## Revendications

1. Cheville (10), en particulier en matière plastique, comprenant une tige (14) composée de quatre segments (20, 22) allongés qui sont reliés les uns aux autres à l'extrémité avant (12) de la cheville et à l'extrémité arrière (16), une partie d'engagement pour une vis étant prévue à l'extrémité avant (12), deux segments (20) opposés l'un à l'autre étant chacun pourvus d'une languette (24) agissant en tant que protection anti-torsion ;
deux nervures principales (32) opposées l'une à l'autre s'étendant à partir de l'extrémité arrière en direction de l'extrémité avant ; chaque nervure principale comprenant une première partie (38) de hauteur constante et ensuite une partie de terminaison (40), chaque espace entre les deux nervures principales (32) étant pourvu d'une nervure secondaire (34) qui se termine en biais à partir de l'extrémité arrière, et la longueur des nervures secondaires (34) correspondant approximativement à la longueur de la première partie (38) des nervures principales (32).

2. Cheville selon la revendication 1, **caractérisée par** une ou plusieurs des caractéristiques suivantes :
- en dessous des languettes, l'épaisseur de paroi des segments (20) n'est pas réduite, ou seulement légèrement réduite ;
- deux segments (20) opposés l'un à l'autre sont réalisés avec une épaisseur de paroi essentiellement constante ;
- deux segments (22) opposés l'un à l'autre sont chacun pourvus de plusieurs dents (26) ;
- au moins une des gorges (30) entre des segments (20, 22) voisins s'étend jusqu'à la hauteur de la première partie (38) de la nervure (32).

3. Cheville selon l'une des revendications précédentes, **caractérisée en ce que** l'épaisseur de paroi des segments (20) en dessous des languettes (24) est telle que les languettes (24) ne peuvent pas être pressées à plat contre les segments (20).

4. Cheville selon l'une des revendications précédentes, **caractérisée en ce que** les segments (20) ayant une épaisseur de paroi constante et les segments (22) pourvus de dents (26) sont agencés en alternance.

5. Cheville selon l'une des revendications précédentes, **caractérisée en ce que** deux gorges (30) diamétralement opposées l'une à l'autre s'étendent jusqu'à la hauteur de la première partie (38) des nervures principales (32).

6. Cheville selon l'une des revendications précédentes, **caractérisée en ce que** des barrettes (42) minces s'étendant en direction périphérique sont prévues entre des segments (20, 22) voisins.

7. Cheville selon l'une des revendications précédentes, **caractérisée en ce que** la partie d'engagement pour la vis comprend un profil intérieur (18) en forme de croix/de parallélépipède.

8. Cheville selon l'une des revendications précédentes, **caractérisée en ce qu'**un épaulement (36) destiné à limiter la profondeur d'insertion de la cheville (12) est prévu à l'extrémité arrière (16).
